(19) Europäisches Patentamt
European Patent Office
Office européen des brevets

(11) **EP 1 760 418 A1**

(12) **EUROPEAN PATENT APPLICATION**

(43) Date of publication:
**07.03.2007 Bulletin 2007/10**

(51) Int Cl.:
*F27B 7/20* $^{(2006.01)}$     *C04B 7/36* $^{(2006.01)}$

(21) Application number: **05405518.1**

(22) Date of filing: **02.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ABB Research Ltd**
**8050 Zürich (CH)**

(72) Inventor: **Sigurd, Karin**
**5404 Baden (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Model for a cement kiln process**

(57) Dual estimation and a parameterized model of the circulation of volatiles is used to identify the changing volatility parameters ($E_1$, $E_2$, A) in a cement kiln and to estimate the concentration of the volatiles; the estimates of the volatility parameters will then be used to predict the evolution of the volatile concentration over time.

The inventive method can be applied in a computer based simulation of the cement kiln. Model predictive control and mixed-integer programming are used to optimize cement production. The module predicts the evolution over time of the concentration of volatile components, a quantity which is used in the mixed-integer program solved in each optimization.

Fig. 2

**Description**

Field of the Invention

The invention relates to the field of cement kiln. It relates to a method for determining model parameters for model predictive control of the transforming process in a kiln System

Background of the Invention

Cement is produced in large, hollow, internally sloping cylinders known as kilns where raw meal is heated with fuel to 1500°C and transformed into clinker. Gypsum and lime stone are the main ingredients in the raw meal fed to the kiln, while the fuels include both conventional fuels such as coal and oil and alternative fuels like tires, plastics and solvents. Some components in the raw meal and the fuel are volatile and evaporate to some extent as the raw meal moves from the pre-heater down towards the burning zone of the kiln, where the fuel is added - sulfur, chlorine and alkalis are important examples of such components. The evaporated components travel in the opposite direction up the kiln, until eventually the volatile components condense back and close the circle, as is schematically depicted in the figure below.

Volatile components play an important part in the mass and energy balances that shape the cement production process. The volatile components are as a rule viewed as contaminations in the clinker - the concentration of volatiles in the clinker should therefore be kept below an upper limit and as low as possible for quality purposes. To reduce the overall volatile concentration in the system, volatiles can be let out as emissions in the gaseous phase, but environmental laws regulate the upper bounds for these emissions and, furthermore, energy is lost from the system which could otherwise be used to heat the raw meal. Recently, the negative cost associated with alternative fuels has prompted cement manufacturers to switch part of their fuel consumption to alternative fuels such as tires and solvents; the drawback is that many of these fuels contain high levels of volatiles like sulfur.

Model predictive control and mixed-integer programming are used to optimize cement production. Since constraints concerning clinker quality and emissions control also need to be satisfied, the concentration of volatile components naturally becomes part of the optimization constraints. For optimal results and margins as narrow as possible, the concentration of volatiles needs to be estimated and predicted as accurately as possible.

The circulation of volatiles in kiln operation has been extensively studied in experiments and simple mathematical models have been proposed based on mass balances that capture the essential features of the process; two or three volatility parameters indicating the degrees of adsorption and evaporation, respectively, are key parts of the models.

Both P. Weber ("Alkaliprobleme und Alkalibeseitigung bei wärmesparenden Trockendrehöfen", Zement-Kalk-Gips, 17(8):335-344, 1964) and H. Ritzmann ("Kreisläufe in Drehöfensystemen", Zement-Kalk-Gips, (8):338-343, 1971) formulated equations describing the circulation of volatiles where three volatility parameters were introduced:

an adsorption degree, describing the extent to which the volatile component is adsorbed to the solid phase in the pre-heater at condensation,

a primary volatility, indicating to what degree the volatile component is evaporated in the burning zone from the raw meal,

and a secondary volatility, indicating to what degree the volatile component is again evaporated from the portion of the solid phase in the pre-heater that has already been recycled at least once (recycled solid phase).

While existing mathematical models of the cement kiln assume the volatility parameters to be known and constant, these parameters are in fact time-varying functions of a number of chemical and mechanical factors; in a dynamic kiln environment, the assumption of known and constant volatility parameters is likely to give rise to an inaccurate prediction of the evolution over time of the volatile concentration, which in turn will lead to inaccuracy in the optimization. If the fuel quality and composition vary considerably, the volatility parameters may change drastically over time and the assumption of constant parameters is likely to give rise to an erroneous projection of the volatile concentration forward in time.

Description of the Invention

It is an object of the invention to provide a method to determine model parameters for model predictive control of the transforming process in a kiln System and thereby determine the concentration over time of volatile components in a kiln with the adsorption degree of volatile components to the solid phase at condensation in the pre-heater of the kiln and the evaporation degrees of volatile components from the raw meal and from the recycled solid phase presumed unknown and varying.

This object is achieved by a method according to claim 1.

Changing volatility parameters are determined and the concentration of the volatiles is estimated with a parameterized model of the circulation of volatiles. The estimates of the volatility parameters are then used to predict the evolution of the volatile concentration over time.

Brief Description of the Drawings

The invention will be explained in more detail in the following text with reference to the attached drawings, in which:

Fig. 1    schematically shows a cement kiln, and

Fig. 2    shows a volatiles evaporation-adsorption diagram.

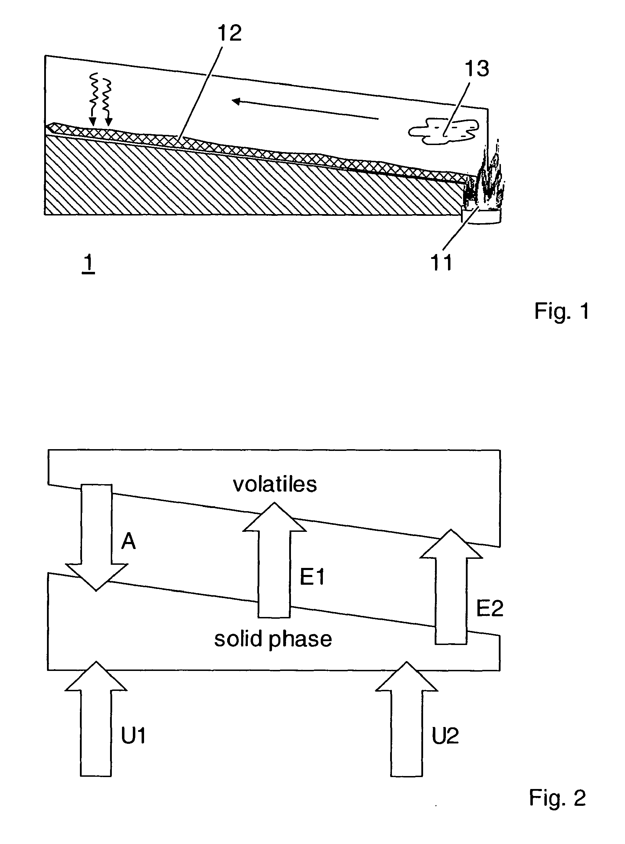

Detailed Description of Preferred Embodiments

When volatility parameters of a cement kiln model are assumed constant and known, one mass balance equation is sufficient to predict the trajectory of the volatile concentration. With unknown and varying volatility parameters however, the system based on one mass balance equation turns unobservable.

Several different mass balance equations can be taken from cement literature, forming together with the original mass balance equation a system of equations with quite some redundancy. Exemplary equations represent mass balances for the volatile in the pre-heater, for the clinker residue, for volatile emissions in the chimney and for dust recirculation.

When introducing the volatility parameters as noise-driven augmented states, identifying the volatility parameters with dual estimation would be preferable. The information redundancy makes the augmented system unobservable for the three-parameter case; however, by combining the original equation with one more mass balance equation, two out of the three volatility parameters, the adsorption factor and one of the volatilities, can be estimated with an extended Kalman filter.

The two mass balance equations used, obtained from the cement literature, are given below as equations (1) and (2), where $x(t)$ denotes the concentration of the volatile component in the pre-heater and $r(t)$ is the concentration of volatile as a residue in the clinker. B, $c_{FCC}$ and $c_{RMCC}$ are constants while $u_1(t)$ is the fuel input, $u_2(t)$ is the raw meal input and $\tau$ is a variable time delay. B, varying from 0 to 1, is the fraction of volatile that is not let out of the system as emissions; $c_{FCC}$ and $c_{RMCC}$ are vectors where the $i^{th}$ element denotes the concentration of volatile in the $i^{th}$ component of the fuel or feed, respectively.

$$\dot{x}(t) = AB(c_{FCC}u_1(t) + E_1 c_{RMCC}u_2(t-\tau) + E_2 x(t-\tau)) - x(t) \quad (1)$$

$$\dot{r}(t) = (1-E_1)c_{RMCC}u_2(t-\tau) + (1-E_2)x(t-\tau) - r(t) \quad (2)$$

The third volatility parameter has to be assumed constant and known - since no such information was available, this filter was not sufficient to predict the trajectory of the volatile concentration.

Experimental data show the range of the secondary volatility to be much reduced compared to those of the other two volatility parameters; while adsorption degree A and primary volatility $E_1$ vary anywhere in the full range from 0 to 1, secondary volatility $E_2$ is somewhat restricted to $E_2 \in [b,1]$ with $b \in [0.68,1]$, the value of $b$ depending on the type of volatile. For sulfur, $b$ varies in the interval [0.68,1] whereas for chlorine $b = 1.0$, making the value of $E_2 = 1.0$.

By choosing the secondary volatility to be the parameter assumed constant and known in the filter, the additional information provided with the reduced range can be of help.

The prediction of the volatile concentration has rather low sensitivity to the value of the secondary volatility within the reduced range. The prediction of the volatile concentration obtained with the median $\hat{E}_2 = \dfrac{1+b}{2}$ can be considered accurate enough. The low sensitivity is related to the fact that seen as a function of $E_2$, the system function as expressed above in equations (1) and (2) is linear. When $E_2$ varies in the interval of unphysical values [0,0.68], the results were quite different with much higher sensitivity to the value of $E_2$ and qualitatively different trajectories.

Indirectly, the estimated secondary volatility can be validated with a time delay, by comparing the estimation and prediction errors obtained with different values of $E_2$; that way, the unobservability associated with the simultaneous estimation of all three volatility parameters can be eluded and an estimate also of the third parameter can be obtained.

The inventive method can be applied in a computer based simulation of the cement kiln. Model predictive control and mixed-integer programming are used to optimize cement production. The module predicts the evolution over time of the concentration of volatile components, a quantity which is used in the mixed-integer program solved in each optimization.

The inventive method is not restricted to the application for cement kiln but can rather be extended to other industrial processes where volatile components appear or even to mathematically analogous problems not necessarily related to volatiles.

**Claims**

1.  Method for predicting the evolution of concentration of volatiles in the clinker over time and for determining model parameters for model predictive control of the transforming process in a kiln System, comprising internally sloping cylinders for transforming raw meal made of gypsum and lime stone into clinker by pre-heating said raw meal in a pre-heater and adding fuel and burning said raw meal in a burner, some of said said system further comprising means for predicting the evolution of concentration of volatiles in the clinker over time and for determining model parameters for model predictive control of the transforming process,
    said predicting means comprising real-time input parameters from the transforming process, namely the concentration of the volatiles in the pre-heater ($x(t)$) and the concentration of the volatiles as a residue in the clinker ($r(t)$),
    said model parameters to be determined being
    a primary volatility ($E_1$), describing the degree to which the volatiles are evaporated in the burner,
    a secondary volatility ($E_2$), describing the degree to which the volatiles are again evaporated from a portion of the solid phase in the pre-heater that has already been recycled at least once, and
    an adsorption degree ($A$), describing the degree to which the evaporated volatiles are adsorbed by the raw meal in the pre-heater,
    said evolution of concentration of volatiles in the clinker being determined in said predicting means by applying a set of mass balance equations defining the changes in concentrations of volatiles over time in the pre-heater and as a residue in the clinker on a basis of said model parameters
    said method comprising the steps of

    - varying the secondary volatility parameter ($E_2$) at b+i*c, with i=0,...,n and c=(1-b)/n,
    - implementing a set of n+1 converging extended Kalman filters for determining the primary volatility and the adsorption degree, and
    - estimating the second volatility parameter ($E_2$) with a time delay by comparing the changes in volatiles estimated by the Kalman filters to actually measured values.

2.  Method of claim 1, **characterized in, that** the variation of the second volatility parameter ($E_2$) depends on the type of volatiles and the variation parameter b is chosen accordingly.

3.  Method of any of claims 1 to 2, **characterized in, that** the Kalman filters are based on the following mass equations:

$$\dot{x}(t) = AB(c_{FCC}u_1(t) + E_1 c_{RMCC}u_2(t - \tau) + E_2 x(t - \tau)) - x(t) ,$$

and

$$\dot{r}(t) = (1 - E_1)c_{RMCC}u_2(t - \tau) + (1 - E_2)x(t - \tau) - r(t);$$

$x(t)$ denoting the concentrations of volatiles in the pre-heater, $r(t)$ denoting the concentrations of volatiles as a residue in the clinker, B, $c_{FCC}$ and $c_{RMCC}$ being constants, $u_1(t)$ being the fuel input, $u_2(t)$ being the raw meal input and $\tau$ being a variable time delay.

12

13

1

11

Fig. 1

volatiles

A

E1

E2

solid phase

U1

U2

Fig. 2

**European Patent Office**

**EUROPEAN SEARCH REPORT**

Application Number

EP 05 40 5518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 382 905 A (ABB RESEARCH LTD) 21 January 2004 (2004-01-21) * paragraph [0031]; claims 1-11 * ----- | 1-3 | F27B7/20 C04B7/36 |
| A | DATABASE CA [Online] CHEMICAL ABSTRACTS SERVICE, COLUMBUS, OHIO, US; VERMA, C. L.: "A case study on optimal design and performance of lime shaft kilns through simulation technique" XP009063059 retrieved from STN Database accession no. 2003:338062 * abstract; table 1 * & INDIAN CHEMICAL ENGINEER , 45(1), 35-42 CODEN: ICENFW; ISSN: 0019-4506, 2003, ----- | 1-3 | |
| A | US 5 687 077 A (GOUGH, JR. ET AL) 11 November 1997 (1997-11-11) * figure 3; example 2 * ----- | 1-3 | |
| A | US 6 790 034 B1 (KEARNS MICHAEL JOHN ET AL) 14 September 2004 (2004-09-14) * claims 1-19; figures 9,11 * ----- | 1-3 | TECHNICAL FIELDS SEARCHED (IPC) F27B C04B |
| A | US 5 707 444 A (HUNDEBOL ET AL) 13 January 1998 (1998-01-13) * page 2, lines 54-63 * ----- | 1-3 | |
| A | WO 02/22246 A (THERMO GAMMA-METRICS; SANCHEZ, JUAN, M., MARTIN) 21 March 2002 (2002-03-21) * claims 1-14 * ----- | 1-3 | |

The present search report has been drawn up for all claims

| Place of search | Date of completion of the search | Examiner |
|---|---|---|
| Munich | 9 March 2006 | Badcock, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 40 5518

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2006

| Patent document cited in search report | | Publication date | Patent family member(s) | | Publication date |
|---|---|---|---|---|---|
| EP 1382905 | A | 21-01-2004 | NONE | | |
| US 5687077 | A | 11-11-1997 | NONE | | |
| US 6790034 | B1 | 14-09-2004 | AT | 292098 T | 15-04-2005 |
| | | | AU | 1045901 A | 14-05-2001 |
| | | | CA | 2389776 A1 | 10-05-2001 |
| | | | DE | 60019152 D1 | 04-05-2005 |
| | | | DE | 60019152 T2 | 26-01-2006 |
| | | | EP | 1228016 A1 | 07-08-2002 |
| | | | WO | 0132581 A1 | 10-05-2001 |
| | | | MX | PA02004432 A | 06-06-2005 |
| US 5707444 | A | 13-01-1998 | AU | 686377 B2 | 05-02-1998 |
| | | | AU | 2342895 A | 16-11-1995 |
| | | | BR | 9507483 A | 12-08-1997 |
| | | | CA | 2182903 A1 | 02-11-1995 |
| | | | CN | 1146190 A | 26-03-1997 |
| | | | CZ | 9602984 A3 | 15-01-1997 |
| | | | DE | 69510665 D1 | 12-08-1999 |
| | | | DE | 69510665 T2 | 21-10-1999 |
| | | | DK | 45994 A | 22-10-1995 |
| | | | WO | 9529138 A1 | 02-11-1995 |
| | | | EP | 0756584 A1 | 05-02-1997 |
| | | | ES | 2133765 T3 | 16-09-1999 |
| | | | GR | 3031441 T3 | 31-01-2000 |
| | | | JP | 9511984 T | 02-12-1997 |
| | | | PL | 316734 A1 | 03-02-1997 |
| | | | RU | 2136622 C1 | 10-09-1999 |
| WO 0222246 | A | 21-03-2002 | AU | 9503901 A | 26-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **P. WEBER.** Alkaliprobleme und Alkalibeseitigung bei wärmesparenden Trockendrehöfen. *Zement-Kalk-Gips,* 1964, vol. 17 ((8)), 335-344

- **H. RITZMANN.** Kreisläufe in Drehöfensystemen. *Zement-Kalk-Gips,* 1971, (8), 338-343